# EUROPÄISCHE PATENTANMELDUNG

(11) **EP 1 942 076 A1**
(43) Veröffentlichungstag der Anmeldung: **09.07.2008**
(21) Anmeldenummer: 07022995.0
(22) Anmeldetag: 27.11.2007
(51) Int. Cl.: C01B 3/36, C01B 3/48

(54) **Verfahren und Vorrichtung zur Synthese von Wasserstoff aus glycerinhaltigen Stoffen**

(30) Priorität: 30.11.2006 DE 102006056641
(71) Anmelder: Linde Aktiengesellschaft, 80807 München (DE)
(72) Erfinder: Behrens, Axel, Dr., 81377 München (DE); Korn, Wibke, 82152 Krailling (DE); Masek, Pavel, Dr., 81477 München (DE); Wellenhofer, Anton, 81247 München (DE)

(57) **Zusammenfassung**

Die Erfindung betrifft ein Verfahren zur Erzeugung eines Wasserstoffproduktes (6) aus einem Glycerin enthaltenden Einsatzstoff (1) sowie eine Vorrichtung zur Durchführung des Verfahrens. Aus dem Glycerin enthaltenden Einsatzstoff (1) wird durch Abtrennung unerwünschter Stoffe (V) und zumindest die Pyrolyse von Glycerin (P) ein Wasserstoff und Kohlenmonoxid enthaltendes Zwischenprodukt (4) erzeugt, das nachfolgend einer Wasserstoffabtrennung (PS) unterzogen wird, wobei das Zwischenprodukt vor der Wasserstoffabtrennung nicht durch Reformierung behandelt wird.

## Beschreibung

Die Erfindung betrifft ein Verfahren zur Erzeugung eines Wasserstoffproduktes aus einem Glycerin enthaltenden Einsatzstoff sowie eine Vorrichtung zur Durchführung des Verfahrens.

Im Bestreben, den Kohlendioxideintrag in die Erdatmosphäre zu senken oder zumindest nicht weiter anwachsen zu lassen, und als Alternativen zu den schwindenden Erdöl- und Erdgasreserven, werden in Zukunft verstärkt Energieträger aus nachwachsenden Rohstoffen erzeugt werden. Gemäß einer EU-Richtlinie sollen in der Europäischen Union bis zum Jahr 2010 mindestens 5,75% des Kraftstoffbedarfs durch derartige Energieträger gedeckt werden. Eine herausragende Rolle spielt hierbei Biodiesel, der bereits heute in einer Konzentration von bis zu fünf Prozent dem an deutschen Tankstellen verfügbaren Dieselkraftstoff zugesetzt ist.

Biodiesel ist ein genormter Krafftstoff, der vor allem aus Rapsöl, aber auch aus anderen pflanzlichen Ölen und -fetten gewonnen wird. Pflanzenöle und -fette bestehen aus Triglyceriden, d. h. Fettsäuren, die jeweils zu dritt an Glycerin gebunden sind. Dieser Aufbau hat zur Folge, dass Pflanzenöle und -fette bei normalen Umgebungstemperaturen zähflüssig bis fest sind, also eine viel höhere Viskosität besitzen als die Kraftstoffe, für die ein marktüblicher Dieselmotor ausgelegt ist. Pflanzenöle und -fette verhalten sich beim Einspritzvorgang anders, und auch die Verbrennung läuft weniger sauber ab. Diese Nachteile lassen sich auch durch motorische Eingriffe - wie beispielsweise der Vorwärmung des Pflanzenöls - nur unvollkommen kompensieren.

Biodiesel entsteht aus Pflanzenölen und -fetten durch den Ersatz des Glycerins durch Methanol. Seine Viskosität entspricht der von handelsüblichem Dieselkraftstoff, weshalb er problemlos auch in nicht modifizierten Dieselmotoren verbrannt werden kann.

Das aus den Pflanzenölen und -fetten bei der Biodieselproduktion abgetrennte Glycerin wird nicht in reiner Form gewonnen, sondern fällt als Teil von Stoffgemischen an, die neben Glycerin größere Mengen an Verunreinigungen enthalten. Ein derartiges Stoffgemisch ist beispielsweise sog. Rohglycerin, das einen Glyceringehalt von 80 - 85% aufweist, daneben aber auch noch in größeren Mengen Wasser und Salze sowie Reststoffe aus dem Produktionsprozess enthält. Nach dem Stand der Technik wird das Rohglycerin in aufwendigen Verfahrensschritten durch Vakuumdestillation, Desodorierung und Filtration soweit aufgereinigt, dass es den strengen Anforderungen des Europäischen Arzneimittelbuches (European Pharmacopeion) genügt, und mit einer Reinheit von mindestens 99,5% als Pharmaglycerin an die Pharmazeutische Industrie verkauft werden kann. Gegenwärtig kann die gesamte bei der Biodieselherstellung anfallende Glycerinmenge auf diese Weise verwertet werden. Mit der absehbaren Ausweitung der Biodieselproduktion, wird dies in Zukunft jedoch immer schwieriger, so dass nach anderen Verwertungswegen für das Rohglycerin gesucht werden muss.

Aufgabe der vorliegenden Erfindung ist es daher, ein Verfahren der gattungsgemäßen Art anzugeben, dass es ermöglicht, bei der Biodieselherstellung anfallende, Glycerin enthaltende Nebenprodukte einer wirtschaftlichen Verwertung zuzuführen.

Diese Aufgabe wird verfahrensseitig erfindungsgemäß dadurch gelöst, dass aus dem Glycerin enthaltenden Einsatzstoff durch Abtrennung unerwünschter Stoffe und zumindest die Pyrolyse von Glycerin ein Wasserstoff und Kohlenmonoxid enthaltendes Zwischenprodukt erzeugt wird, das nachfolgend einer Wasserstoffabtrennung unterzogen wird, wobei das Zwischenprodukt vor der Wasserstoffabtrennung nicht durch Reformierung behandelt wird.

Eine Ausgestaltung des erfindungsgemäßen Verfahrens sieht vor, dass die Abtrennung unerwünschter Stoffe - bereits im Einsatzstoff vorhandener und/oder bei der Durchführung des erfindungsgemäßen Verfahrens erzeugter- und die Pyrolyse von Glycerin gleichzeitig in einem Verfahrensschritt durchgeführt werden.

Eine weitere Ausgestaltung des erfindungsgemäßen Verfahrens sieht vor, dass aus dem Einsatzstoff in zumindest zwei aufeinander folgenden Verfahrensschritten ein Zwischenprodukt gewonnen wird, wobei in jedem der Verfahrenschritte unerwünschte Stoffe abgetrennt werden oder/und Glycerin durch Pyrolyse umgesetzt wird.

Bevorzugte Ausgestaltungen des erfindungsgemäßen Verfahrens sehen vor, dass die Wasserstoffabtrennung durch Druckwechseladsorption (PSA) oder in einem Membranverfahren durchgeführt wird, wobei neben einem Wasserstoffprodukt zumindest ein Restgasstrom erzeugt wird.

Das bei der Wasserstoffabtrennung erzeugte Restgas, enthält gewöhnlich neben inerten Bestandteilen (z. B. CO₂, H₂O) auch brennbare Anteile, wie H₂, CO und Kohlenwasserstoffe. Um die in Restgas enthaltene chemische Energie zu nutzen, sieht eine weitere Ausgestaltung des erfindungsgemäßen Verfahrens vor, dass das Restgas verbrannt und die bei der Verbrennung freigesetzte Energie zur Deckung des Energiebedarfs innerhalb des Verfahrens verwendet wird. Bevorzugt wird die freigesetzte Energie zur Vorwärmung des Einsatzstoffes oder/und zur Abtrennung unerwünschter Stoffe aus dem Einsatzstoff oder/und zur Pyrolyse von Glycerin eingesetzt.

Zur Steigerung der Wasserstoffausbeute sieht eine zweckmäßige Ausgestaltung des erfindungsgemäßen Verfahrens vor, dass das durch Abtrennung unerwünschter Stoffe und zumindest die Pyrolyse von Glycerin aus dem Einsatzstoff erzeugte Zwischenprodukt vor der Wasserstoffabtrennung einer Wassergas-Shift-Reaktion unterzogen wird, bei welcher im Zwischenprodukt enthaltenes Kohlenmonoxid unter Beteiligung von Wasser in Wasserstoff und Kohlenmonoxid vorzugsweise vollständig umgesetzt wird. Falls das Zwischenprodukt nicht genügend Wasser enthält, um den gewünschten CO-Umsatz zu erreichen, wird der Wassergehalt im Zwischenprodukt vor der Wassergas-Shift durch Zumischung von Wasser auf einen Wert erhöht, der ausreicht, den Wasserbedarf der Reaktion zu decken. Die Erfindung sieht weiterhin vor, dass die Wassergas-Shift als Niedertemperatur-Wassergas-Shift oder/und als Mitteltemperatur-Wassergas-Shift oder/und als Hochtemperatur-Wassergas-Shift durchgeführt wird.

Das durch Abtrennung unerwünschter Stoffe und zumindest die Pyrolyse von Glycerin aus dem Einsatzstoff erzeugte Zwischenprodukt kann immer noch unerwünschte Bestandteile enthalten, die in den nachfolgenden Verfahrensschritten (Wassergas-Shift, Wasserstoffabtrennung) zu Störungen, wie beispielsweise zur Vergiftung von Katalysatoren oder/und der Blockierung beispielsweise von Membranen oder Rohrleitungen führen. Eine Weiterbildung des erfindungsgemäßen Verfahrens sieht daher vor, dass das Zwischenprodukt vor der Wasserstoffabtrennung oder vor der Wassergas-Shift-Reaktion einer Reinigung unterzogen wird, in der unerwünschte Bestandteile aus dem Zwischenprodukt entfernt werden.

Um im Einsatzstoff vorliegende unerwünschte Stoffe abzutrennen, wird der Einsatzstoff erfindungsgemäß bevorzugt einer Destillation oder/und einer thermische Trocknung oder/und einer Filterung über Aktivkohle oder/und Membran oder/und einer Chromatographie oder/und einem lonenaustausch unterzogen.

Unter thermischer Trocknung ist hierbei zu verstehen, dass der Einsatzstoff in eine thermische Trocknungseinrichtung eingeleitet und dort einer thermischen Behandlung unterzogen wird. Flüchtige Bestandteile, wie Wasser und Glycerin, werden verdampft und bilden, u. U. mit anderen gasförmigen Stoffen, eine Gasfraktion, während Feststoffe, wie etwa Salze, in eine weitgehend wasserfreie Feststofffraktion überführt werden. Feststoff- und Gasfraktion werden anschließend weitgehend getrennt aus der thermischen Trocknungseinrichtung abgezogen, die_hierzu mit einer geeigneten Einrichtung zur Trennung von Staub und Gas, wie beispielsweise einem Schwerkraftabscheider oder/und einem Zyklon oder/und einer Filtriereinrichtung oder/und einer Wasserwäsche, ausgestattet ist.

Bei hinreichend hohen Temperaturen wird Glycerin thermisch zersetzt, d. h. pyrolysiert. Das erfindungsgemäße Verfahren weiterbildend wird daher vorgeschlagen, dass die thermische Trocknung des Einsatzstoffes bei Temperaturen durchgeführt wird, bei denen zumindest eine teilweise Umsetzung des im Einsatzstoff enthaltenen Glycerins durch Pyrolyse erfolgt. Je nach dem, wie viel des Glycerins bei der thermischen Trocknung pyrolysiert wird, wird die Gasfraktion im Anschluss an die thermische Trocknung einer weiteren Pyrolyse unterzogen.

Eine vorteilhafte Ausgestaltung des erfindungsgemäßen Verfahrens sieht vor, dass die zur thermischen Trocknung des Einsatzstoffes benötigte Wärme einem heißen Gasstrom entzogen wird, dessen Temperatur zwischen 100 und 1.000°C, bevorzugt zwischen 100 und 250°C liegt, und bei dem es sich vorzugsweise um einen Teilstrom des durch Abtrennung unerwünschter Stoffe und zumindest die Pyrolyse von Glycerin aus dem Einsatzstoff gewonnenen Zwischenprodukts handelt. Wird die Wärme im indirekten Wärmetausch von diesem Teilstrom auf den Einsatzstoff übertragen, so wird der abgekühlte Teilstrom vorteilhaft wieder zurückgeführt und in den Zwischenproduktstrom eingespeist.

Vorzugsweise werden zur thermischen Trocknung des Einsatzstoffes Fließbettgranulatoren oder/und Fließbetttrockner oder/und Trommeltrockner oder/und Wirbelschichttrockner oder/und Suspensionstrockner oder/und Pastentrockner eingesetzt.

Varianten des erfindungsgemäßen Verfahrens sehen vor, dass die Pyrolyse unter Zuführung von Wasser oder/und Dampf oder/und einem Oxidationsmittel durchgeführt wird, wobei es sich bei dem Oxidationsmittel um Luft oder um mit Sauerstoff angereicherte Luft oder um Sauerstoff handelt.

Abhängig von dem Verfahren, das zur Abtrennung unerwünschter Stoffe aus dem Einsatzstoff gewählt wird, kann bei der Durchführung des erfindungsgemäßen Verfahrens ein wasserhaltiges Gemisch (Abwasser) anfallen, in dem die abgetrennten Stoffe in gelöster oder/und suspendierter Form vorliegen, und das ohne weitere Behandlung nicht stofflich genutzt werden kann. Das Abwasser stellt einen Abfallstoff dar, der als Sondermüll einer Deponierung zugeführt werden muss. Um die Deponiekosten gering zu halten, wird angestrebt, das zu deponierende Abfallvolumen so klein wie möglich zu halten. Eine Ausgestaltung des erfindungsgemäßen Verfahrens sieht daher vor, dass das Abwasser einer Behandlung unterzogen wird, bei der das zu deponierende Abfallvolumen reduziert wird. Bevorzugt wird das Abwasser in einer thermischen Trocknungseinrichtung einer Trocknung unterzogen, wobei eine weitgehend wasserfreie Feststofffraktion und eine Gasfraktion erzeugt werden. Im günstigsten Fall kann die so gewonnene Feststofffraktion wirtschaftlich (z. B. als Düngemittel) verwertet werden, sodass das zu deponierende Abfallvolumen auf Null sinkt.

Eine vorteilhafte Ausgestaltung des erfindungsgemäßen Verfahrens sieht vor, dass die zur thermischen Trocknung von Abwasser benötigte Wärme einem heißen Gasstrom entzogen wird, dessen Temperatur zwischen 100 und 1.000°C, bevorzugt zwischen 100 und 250°C liegt, und bei dem es sich vorzugsweise um einen Teilstrom des durch Abtrennung unerwünschter Stoffe und zumindest die Pyrolyse von Glycerin aus dem Einsatzstoff gewonnenen Zwischenprodukts handelt. Aufgrund der Wärme, die von dem heißen Gasstrom an das Abwasser abgegeben wird, gehen flüchtige Bestandteile aus dem Abwasser in die Gasphase über, wodurch eine Gasfraktion und eine weitgehend wasserfreie Feststofffraktion, die je nach dem eingesetzten Trocknungsverfahren beispielsweise als Granulat oder Pulver vorliegt, erzeugt werden.

Handelt es sich bei dem heißen, zur thermischen Trocknung von Abwasser eingesetzten Gasstrom um einen heißen Teilstrom des durch Abtrennung unerwünschter Stoffe und zumindest die Pyrolyse von Glycerin aus dem Einsatzstoff gewonnenen Zwischenprodukts und wird die Wärme im direkten Wärmetausch auf das zu trocknende Abwasser übertragen, so sieht eine Weiterbildung des erfindungsgemäßen Verfahrens vor, dass die bei der Trocknung erzeugte Gasfraktion vorzugsweise in einer Wasserwascheinrichtung einer Wasserwäsche unterzogen und anschließend in den Zwischenproduktstrom zurückgeführt wird. Zweckmäßiger Weise wird das beladene Waschwasser aus der Wasserwascheinrichtung abgezogen und dem Glycerin enthaltenden Einsatzstoff zugemischt.

Vorzugsweise werden zur thermischen Trocknung von Abwasser Fließbettgranulatoren oder/und Fließbetttrockner oder/und Trommeltrockner oder/und Wirbelschichttrockner oder/und Suspensionstrockner oder/und Pastentrockner eingesetzt.

Die Erfindung betrifft ferner eine Vorrichtung zur Durchführung des erfindungsgemäßen Verfahrens.

Vorrichtungsseitig wird die gestellte Aufgabe dadurch gelöst, dass sie eine Pyrolyseeinrichtung, in der aus dem Einsatzstoff durch Abtrennung von Verunreinigungen und Pyrolyse des im Einsatzstoff enthaltenen Glycerins ein Wasserstoff und Kohlenmonoxid enthaltendes Zwischenprodukt erzeugbar ist, und zumindest eine der Pyrolyseeinrichtung nachgeschaltete Einrichtung zur Wasserstoffabtrennung, in der im Zwischenprodukt enthaltener Wasserstoff abtrennbar ist, umfasst, wobei zwischen der Pyrolyseeinrichtung und der Einrichtung zur Wasserstoffabtrennung keine Einrichtung zur Gasreformierung angeordnet ist.

Bevorzugte Ausgestaltungen der erfindungsgemäßen Vorrichtung sehen vor, dass die Einrichtung zur Wasserstoffabtrennung als Druckwechseladsorption (PSA) oder als Membranverfahren ausgeführt ist.

Zur Steigerung der Wasserstoffausbeute sieht eine zweckmäßige Ausgestaltung der erfindungsgemäßen Vorrichtung vor, dass vor der Einrichtung zur Wasserstoffabtrennung ein Einrichtung zur Durchführung einer Wassergas-Shift-Reaktion angeordnet ist, in der das in dem durch Abtrennung unerwünschter Stoffe und zumindest die Pyrolyse von Glycerin aus dem Einsatzstoff erzeugten Zwischenprodukt enthaltene Kohlenmonoxid unter Beteiligung von Wasser vorzugsweise vollständig in Wasserstoff und Kohlenmonoxid umsetzbar ist. Vorzugsweise handelt es sich bei der Einrichtung zur Durchführung einer Wassergas-Shift-Reaktion um einen Niedertemperatur-Wassergas-Shift-Reaktor oder/und einen Mitteltemperatur-Wassergas-Shift-Reaktor oder/und einen Hochtemperatur-Wassergas-Shift-Reaktor.

Das durch Abtrennung unerwünschter Stoffe und zumindest die Pyrolyse von Glycerin aus dem Einsatzstoff erzeugte Zwischenprodukt kann immer noch unerwünschte Bestandteile enthalten, die in den nachfolgenden Verfahrensschritten (Wassergas-Shift, Wasserstoffabtrennung) zu Störungen, wie beispielsweise zur Vergiftung von Katalysatoren oder/und der Blockierung beispielsweise von Membranen oder Rohrleitungen führen. Eine Weiterbildung der erfindungsgemäßen Vorrichtung sieht daher vor, dass vor der Wasserstoffabtrennung oder vor der Einrichtung zur Durchführung einer Wassergas-Shift-Reaktion eine Reinigungseinrichtung angeordnet ist, in dem aus dem Zwischenprodukt unerwünschte Bestandteile abtrennbar sind.

Eine bevorzugte Ausführung der erfindungsgemäßen Vorrichtung sieht vor, dass die Pyrolyseeinrichtung aus einer thermischen Trocknungseinrichtung besteht, in der aus dem Einsatzstoff eine Gas- und eine weitgehend wasserfreie Feststofffraktion erzeugbar sind, wobei aufgrund der in der thermischen Trocknungseinrichtung herrschenden Temperaturen in der Gasfraktion vorliegendes Glycerin zumindest teilweise pyrolysiert wird. Zweckmäßiger Weise umfasst die thermische Trocknungseinrichtung eine geeignete Einrichtung zur Abtrennung von Staub aus der Gasfraktion, sodass ein weitgehend staubfreies Zwischenprodukt erzeugbar ist. Vorzugsweise handelt es sich bei der thermische Trocknungseinrichtung um einen Fließbettgranulator oder/und einen Fließbetttrockner oder/und einen Trommeltrockner oder/und einen Wirbelschichttrockner oder/und einen Suspensionstrockner oder/und einen Pastentrockner. Derartige thermische Trocknungseinrichtungen sind dem Fachmann seit Jahren bekannt und auf dem Markt verfügbar.

Eine andere bevorzugte Ausführung der erfindungsgemäßen Vorrichtung sieht vor, dass die Pyrolyseeinrichtung eine Reinigungseinrichtung und einen nachgeschalteten Pyrolysereaktor umfasst, wobei in der Reinigungsseinrichtung aus dem Einsatzstoff durch Abtrennung von Verunreinigungen ein Pyrolyseeinsatz erzeugbar ist, welcher im Pyrolysereaktor durch Pyrolyse in eine Zwischenprodukt umsetzbar ist. Erfindungsgemäß ist die Reinigungseinrichtung bevorzugt als Vakuumdestillationseinrichtung oder/und thermische Trocknungseinrichtung oder/und Filtereinrichtung mit Aktivkohle oder Membran oder/und Chromatographieeinrichtung oder/und Ionenaustauscher ausgeführt.

Eine vorteilhafte Variante der erfindungsgemäßen Vorrichtung sieht eine Einrichtung zur Reduzierung des Wassergehaltes eines bei der Reinigung des Glycerin enthaltenden Einsatzstoffes anfallenden, nicht weiter stofflich nutzbaren wasserhaltigen Gemisches (Abwasser) vor. Vorzugsweise handelt es sich bei dieser Einrichtung um eine thermische Trocknungseinrichtung, wie beispielsweise einen Fließbettgranulator oder/und einen Fließbetttrockner oder/und einen Trommeltrockner oder/und einen Wirbelschichttrockner oder/und einen Suspensionstrockner oder/und einen Pastentrockner. Derartige thermische Trocknungseinrichtungen sind dem Fachmann seit Jahren bekannt und auf dem Markt verfügbar. Zweckmäßiger Weise ist die thermische Trocknungseinrichtung so ausgestaltet, dass aus dem Abwasser eine weitgehend wasserfreie Feststoff- und eine weitgehend staubfreie Gasfraktion erzeugbar sind.

Handelt es sich bei der thermischen Trocknungseinrichtung um eine Einrichtung, in welcher dem zu trocknenden Abwasser in direktem Kontakt mit einem heißen Teilstrom des durch Abtrennung unerwünschter Stoffe und zumindest die Pyrolyse von Glycerin aus dem Einsatzstoff gewonnenen Zwischenprodukts Energie zuführbar ist, so sieht eine vorteilhafte Ausgestaltung der erfindungsgemäßen Vorrichtung eine Wasserwascheinrichtung vor; in welche der aus der thermischen Trocknungseinrichtung austretende, mit Staub beladene Gasstrom einleitbar und dort durch Wasserwäsche von Staub befreibar ist, bevor er in den Zwischenproduktstrom zurückgeführt wird. Zweckmäßiger Weise ist das beladene Waschwasser aus der Wasserwäsche abzieh- und dem Rohglyzerin zumischbar.

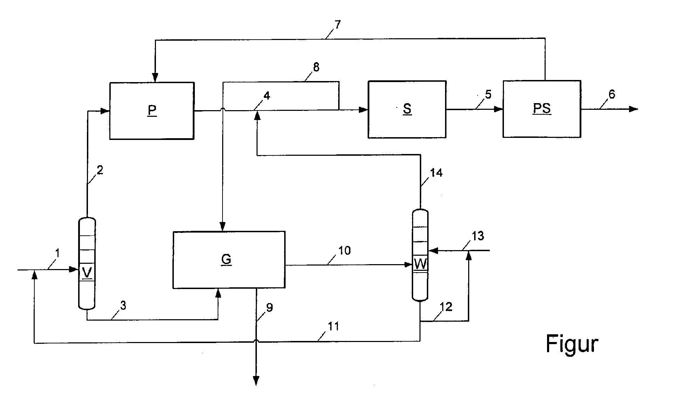

Im Folgenden soll die Erfindung anhand eines in der Figur schematisch dargestellten Ausführungsbeispiels näher erläutert werden:

Das vorliegende Ausführungsbeispiel betrifft eine Anlage zur Erzeugung eines vorwiegend Wasserstoff enthaltenden Produktgases, wobei Rohglycerin aus der Biodieselherstellung als Einsatz dient, dass zu ca. 85% aus Glycerin besteht, daneben aber auch noch in größeren Mengen Wasser und Salze sowie Reststoffe aus dem Produktionsprozess enthält.

Über Leitung 1 wird das Rohglycerin in die Vakuumdestillationseinrichtung V eingeleitet, wo es in die beiden Stoffströme 2 und 3 getrennt wird. Anschließend wird der Stoffstrom 2, der nahezu ausschließlich aus Glycerin besteht, dem autothermen Pyrolysereaktor P als Einsatz zugeleitet und dort zu einem vorwiegend aus Wasserstoff und Kohlenmonoxid bestehenden Pyrolyseprodukt umgewandelt. Das Pyrolyseprodukt wird über Leitung 4 aus dem Pyrolysereaktor P abgezogen und dem Shift-Reaktor S zugeführt. Aus dem Shift-Reaktor S, in welchem der überwiegende Teil des Kohlenmonoxids mit Wasser in einer Wassergas-Shift-Reaktion zu Kohlendioxid und Wasserstoff umgesetzt wird, wird ein vorwiegend Wasserstoff enthaltendes Shift-Gas über Leitung 5 abgezogen und einer Druckwechseladsorption (PSA) zugeleitet, wo der im Shift-Gas enthaltene Wasserstoff mit hoher Ausbeute (>90mol-%) abgetrennt wird. Der abgetrennte Wasserstoff wird mit einer Reinheit von mehr als 99% über Leitung 6 als Wasserstoffprodukt weiter geführt, während der H₂ und CO enthaltende Restgasstrom 7 zur Befeuerung des Pyrolysereaktors P verwendet wird.

Der Stoffstrom 3 aus der Vakuumdestillationseinrichtung V, der vorwiegend aus Wasser und Salzen sowie Reststoffen aus der Biodieselherstellung besteht, wird dem Granulator G zugeleitet und dort mittels des heißen Stoffstroms 8, der vor dem Shift-Reaktor S aus dem Pyrolyseproduktstrom 4 abgezweigt wird, getrocknet. Die im Stoffstrom 3 enthaltenen Salze und andere Feststoffe werden in ein Granulat überführt und über Leitung 9 aus dem Granulator G abgezogen. Über Leitung 10 wird ein Stoffstrom, der überwiegend aus Gasen und Dämpfen besteht, daneben aber auch Feststoffe in Staubform enthält, der Wasserwascheinrichtung W zugeführt und dort gereinigt. Ein Teil des beladenen Waschwassers aus der Wasserwascheinrichtung W wird über Leitung 11 abgezogen und gemeinsam mit dem Rohglyzerin über Leitung 1 in die Vakuumdestillationseinrichtung V eingeleitet, während der andere Teil 12 mit Frischwasser 13 gemischt und als Waschwasser in die Wasserwascheinrichtung W zurück geführt wird. Über Leitung 14 wird ein weitgehend aus Pyrolysegas und Wasserdampf bestehender Stoffstrom aus der Wasserwascheinrichtung W abgezogen und gemeinsam mit dem Pyrolyseprodukt 4 dem Dampfreformer D zugeführt.

## Patentansprüche

1. Verfahren zur Erzeugung eines Wasserstoffproduktes aus einem Glycerin enthaltenden Einsatzstoff, **dadurch gekennzeichnet, dass** aus dem Glycerin enthaltenden Einsatzstoff durch Abtrennung unerwünschter Stoffe und zumindest die Pyrolyse von Glycerin ein Wasserstoff und Kohlenmonoxid enthaltendes Zwischenprodukt erzeugt wird, das nachfolgend einer Wasserstoffabtrennung unterzogen wird, wobei das Zwischenprodukt vor der Wasserstoffabtrennung nicht durch Reformierung behandelt wird.

2. Verfahren nach Anspruch 1, **dadurch gekennzeichnet, dass** die Abtrennung unerwünschter Stoffe - bereits im Einsatzstoff vorhandener und/oder bei der Durchführung des erfindungsgemäßen Verfahrens erzeugter - und die Pyrolyse von Glycerin gleichzeitig in einem Verfahrensschritt durchgeführt werden.

3. Verfahren nach Anspruch 1, **dadurch gekennzeichnet, dass** aus dem Einsatzstoff in zumindest zwei aufeinander folgenden Verfahrensschritten ein Zwischenprodukt gewonnen wird, wobei in jedem der Verfahrenschritte unerwünschte Stoffe abgetrennt werden oder/und Glycerin durch Pyrolyse umgesetzt wird.

4. Verfahren nach einem der Ansprüche 1 bis 3, **dadurch gekennzeichnet, dass** die Wasserstoffabtrennung durch Druckwechseladsorption (PSA) oder in einem Membranverfahren durchgeführt wird, wobei neben einem Wasserstoffprodukt zumindest ein Restgasstrom erzeugt wird.

5. Verfahren nach einem der Ansprüche 1 bis 4, **dadurch gekennzeichnet, dass** bei der Wasserstoffabtrennung erzeugtes Restgas verbrannt und die bei der Verbrennung freigesetzte Energie zur Deckung des Energiebedarfs innerhalb des Verfahrens verwendet wird.

6. Verfahren nach einem der Ansprüche 1 bis 5, **dadurch gekennzeichnet, dass** das Zwischenprodukt vor der Wasserstoffabtrennung einer Wassergas-Shift-Reaktion unterzogen wird, bei welcher im Zwischenprodukt enthaltenes Kohlenmonoxid unter Beteiligung von Wasser in Wasserstoff und Kohlenmonoxid vorzugsweise vollständig umgesetzt wird.

7. Verfahren nach einem der Ansprüche 1 bis 6, **dadurch gekennzeichnet, dass** das Zwischenprodukt vor der Wasserstoffabtrennung oder vor der Wassergas-Shift-Reaktion einer Reinigung unterzogen wird, in der unerwünschte Bestandteile aus dem Zwischenprodukt entfernt werden.

8. Verfahren nach einem der Ansprüche 1 bis 7, **dadurch gekennzeichnet, dass** die Pyrolyse unter Zuführung von Wasser oder/und Dampf oder/und einem Oxidationsmittel durchgeführt wird, wobei es sich bei dem Oxidationsmittel um Luft oder um mit Sauerstoff angereicherte Luft oder um Sauerstoff handelt.

9. Verfahren nach einem der Ansprüche 1 bis 8, **dadurch gekennzeichnet, dass** im Einsatzstoff vorliegende unerwünschte Stoffe durch Destillation oder/und thermische Trocknung oder/und Filterung über Aktivkohle oder/und Membran oder/und Chromatographie oder/und einem Ionenaustausch abgetrennt werden.

10. Verfahren nach Anspruch 9, **dadurch gekennzeichnet, dass** die thermische Trocknung des Einsatzstoffes bei Temperaturen durchgeführt wird, bei denen zumindest eine teilweise Umsetzung des im Einsatzstoff enthaltenen Glycerins durch Pyrolyse erfolgt.

11. Verfahren nach einem der Ansprüche 1 bis 10, **dadurch gekennzeichnet, dass** ein bei der Abtrennung unerwünschter Stoff aus dem Einsatzstoff anfallendes wasserhaltiges Gemisch, in dem die abgetrennten Stoffe in gelöster oder/und suspendierter Form vorliegen, in einer thermischen Trocknungseinrichtung einer Trocknung unterzogen wird, wobei eine weitgehend wasserfreie Feststofffraktion und eine Gasfraktion erzeugt werden.

12. Vorrichtung zur Erzeugung eines Wasserstoffproduktes aus einem Glycerin enthaltenden Einsatzstoff, **dadurch gekennzeichnet, dass** sie eine Pyrolyseeinrichtung, in der aus dem Einsatzstoff durch Abtrennung von Verunreinigungen und Pyrolyse des im Einsatzstoff enthaltenen Glycerins ein Wasserstoff und Kohlenmonoxid enthaltendes Zwischenprodukt erzeugbar ist, und zumindest eine der Pyrolyseeinrichtung nachgeschaltete Einrichtung zur Wasserstoffabtrennung, in der im Zwischenprodukt enthaltener Wasserstoff abtrennbar ist, umfasst, wobei zwischen der Pyrolyseeinrichtung und der Einrichtung zur Wasserstoffabtrennung keine Einrichtung zur Gasreformierung angeordnet ist.

13. Vorrichtung nach Anspruch 12, **dadurch gekennzeichnet, dass** die Einrichtung zur Wasserstoffabtrennung als Druckwechseladsorption (PSA) oder als Membranverfahren ausgeführt ist.

14. Vorrichtung nach einem der Ansprüche 12 oder 13, **dadurch gekennzeichnet, dass** vor der Einrichtung zur Wasserstoffabtrennung ein Einrichtung zur Durchführung einer Wassergas-Shift-Reaktion angeordnet ist, in der das in dem durch Abtrennung unerwünschter Stoffe und zumindest die Pyrolyse von Glycerin aus dem Einsatzstoff erzeugten Zwischenprodukt enthaltene Kohlenmonoxid unter Beteiligung von Wasser vorzugsweise vollständig in Wasserstoff und Kohlenmonoxid umsetzbar ist.

15. Vorrichtung nach einem der Ansprüche 12 bis 14, **dadurch gekennzeichnet, dass** vor der Wasserstoffabtrennung oder vor der Einrichtung zur Durchführung einer Wassergas-Shift-Reaktion eine Reinigungseinrichtung angeordnet ist, in dem aus dem Zwischenprodukt unerwünschte Bestandteile abtrennbar sind.

16. Vorrichtung nach einem der Ansprüche 12 bis 15, **dadurch gekennzeichnet, dass** vor der Wasserstoffabtrennung oder vor der Einrichtung zur Durchführung einer Wassergas-Shift-Reaktion eine Reinigungseinrichtung angeordnet ist, in dem aus dem Zwischenprodukt unerwünschte Bestandteile abtrennbar sind.

17. Vorrichtung nach einem der Ansprüche 12 bis 16, **dadurch gekennzeichnet, dass** die Pyrolyseeinrichtung aus einer thermischen Trocknungseinrichtung besteht, in der aus dem Einsatzstoff eine Gas- und eine weitgehend wasserfreie Feststofffraktion erzeugbar sind, wobei aufgrund der in der thermischen Trocknungseinrichtung herrschenden Temperaturen in der Gasfraktion vorliegendes Glycerin zumindest teilweise pyrolysiert wird.

18. Vorrichtung nach einem der Ansprüche 12 bis 16, **dadurch gekennzeichnet, dass** die Pyrolyseeinrichtung eine Reinigungseinrichtung und einen nachgeschalteten Pyrolysereaktor umfasst, wobei in der Reinigungsseinrichtung aus dem Einsatzstoff durch Abtrennung von Verunreinigungen ein Pyrolyseeinsatz erzeugbar ist, welcher im Pyrolysereaktor durch Pyrolyse in eine Zwischenprodukt umsetzbar ist.

19. Vorrichtung nach Anspruch 18, **dadurch gekennzeichnet, dass** es sich bei der Reinigungseinrichtung um eine Vakuumdestillationseinrichtung oder/und eine thermische Trocknungseinrichtung oder/und eine Filtereinrichtung mit Aktivkohle oder Membran oder/und eine Chromatographieeinrichtung oder/und einen Ionenaustauscher handelt.

20. Vorrichtung nach einem der Ansprüche 12 bis 19, **dadurch gekennzeichnet, dass** sie eine Einrichtung zur Reduzierung des Wassergehaltes eines bei der Reinigung des Glycerins enthaltenden Einsatzstoffes anfallenden, nicht weiter stofflich nutzbaren wasserhaltigen Gemisches (Abwasser) aufweist.
